# EUROPÄISCHE PATENTSCHRIFT

(11) **EP 0 916 149 B1**
(45) Veröffentlichungstag und Bekanntmachung des Hinweises auf die Patenterteilung: **23.01.2002**
(21) Anmeldenummer: 97935492.5
(22) Anmeldetag: 23.07.1997
(51) Int. Cl.: H01H 11/04, B23K 33/00, B23K 26/00

(54) **ELEKTRISCHER SCHALTER UND VERFAHREN ZUR HERSTELLUNG EINES DERARTIGEN SCHALTERS**
ELECTRICAL SWITCH, AND METHOD OF MANUFACTURING SUCH A SWITCH
COMMUTATEUR ELECTRIQUE ET SON PROCEDE DE FABRICATION

(30) Priorität: 29.07.1996 DE 19630533
(43) Veröffentlichungstag der Anmeldung: 19.05.1999
(73) Patentinhaber: Marquardt GmbH, 78604 Rietheim-Weilheim (DE)
(72) Erfinder: MATTES, Anton, D-78582 Balgheim (DE)
(74) Vertreter: Patentanwälte Eisele, Otten & Roth
(86) Internationale Anmeldenummer: DE9701587
(87) Internationale Veröffentlichungsnummer: WO9805051

(56) Entgegenhaltungen:
- EP-A- 0 678 882

## Beschreibung

Die Erfindung betrifft einen elektrischen Schalter nach dem Oberbegriff des Patentanspruchs 1 sowie ein Verfahren zur Herstellung eines Kontaktsystems für einen derartigen elektrischen Schalter nach dem Oberbegriff des Patentanspruchs 5.

Solche Schalter werden häufig mit einem kleinem Gehäuse ausgestattet, so daß für das Kontaktsystem lediglich ein kleiner Einbauraum im Gehäuse zur Verfügung steht. Das für diesen kleinen Einbauraum ausgelegte Kontaktsystem soll dennoch ein sicheres Schaltverhalten gewährleisten.

Aus der DE-OS 195 12 277 ist ein derartiger elektrischer Schalter mit einem Kontaktsystem bekannt, wobei das Kontaktsystem einen an einem Kontaktträger angeordneten Kontakt besitzt. Der wiederum aus einem Kontaktkörper und einer Kontaktfläche bestehende Kontakt ist derart in einer Ausnehmung an dem Kontaktträger angeordnet, daß die Kontaktfläche an einer ersten Seite des Kontaktträgers freiliegt. Der Kontaktkörper steht an einer weiteren, zweiten Seite des Kontaktträgers über, wobei die zweite Seite ungefähr senkrecht zur ersten Seite steht, und ist am Kontaktträger durch Verprägen, Verstemmen, Verschweissen o. dgl. befestigt.

Dieses Kontaktsystem wird in nachfolgenden Fertigungsschritten zusammen mit weiteren Komponenten in das Gehäuse des Schalters eingebaut. Häufig erfolgen die Fertigungsschritte in entsprechend ausgebildeten Automaten. Es hat sich nun herausgestellt, daß sich unter Umständen der Kontakt im Verlaufe der weiteren Fertigungsschritte vom Kontaktträger lösen kann, so daß die Funktionssicherheit des Schalters gefährdet ist.

Der Erfindung liegt die Aufgabe zugrunde, die Befestigung des Kontakts am Kontaktträger bei dem bekannten Kontaktsystem weiter zu verbessern sowie ein geeignetes Herstellverfahren für ein derart verbessertes Kontaktsystem anzugeben, wobei das Herstellverfahren insbesondere zur Verwendung in einem Automaten geeignet sein soll.

Diese Aufgabe wird bei einem gattungsgemäßen elektrischen Schalter durch die kennzeichnenden Merkmale des Anspruchs 1 und bei einem gattungsgemäßen Verfahren zur Herstellung eines Kontaktsystems für einen derartigen elektrischen Schalter durch die kennzeichnenden Merkmale des Anspruchs 5 gelöst.

Weitere Ausgestaltungen der Erfindung sind Gegenstand der Unteransprüche.

Es ist vorteilhaft, wenn der verprägte Bereich des Kontaktkörpers eine im wesentlichen plane Fläche bildet, die parallel in Bezug zur Oberfläche der zweiten Seite des Kontaktträgers verläuft. Dadurch werden die nicht zur Verschweissung beitragenden Streuverluste der Laserstrahlung klein gehalten. Überdeckt die plane Fläche des verprägten Bereichs die von der Schweißzone des Schweißpunktes umfaßte Fügezone, so fällt die gesamte Intensität des Laserstrahls auf den verprägten Bereich, wodurch die unkontrollierbaren, schwankenden Streuverluste des Kontaktträgers vollständig entfallen. Diese plane Fläche wird durch Planieren beim Herstellen der Verprägung mittels eines entsprechend ausgestalteten Werkzeuges erzeugt. Insbesondere kann die plane Fläche eben mit der zweiten Seite des Kontaktträgers verlaufend ausgebildet sein, so daß die Richtung des Laserstrahls für die Verschweissung in einfacher Weise in Bezug auf die Oberfläche der zweiten Seite des Kontaktträgers justierbar ist. Zudem gewährleistet das Planieren eine Einspannung des Kontaktstücks in der Ausnehmung am Kontaktträger, so daß ein Verzug beim Verschweissen ausgeschlossen ist.

In einer Weiterbildung kann eine Sicke an der zweiten Seite in den Kontaktträger eingeprägt werden, wobei die Sicke wenigstens entlang eines Teilbereichs des Kontaktkörpers verläuft. Auch diese Maßnahme trägt durch Erhöhung des Lochleibungsdrucks auf den Kontaktkörper und damit zur Verbesserung der Einspannung des Kontaktstücks in der Ausnehmung am Kontaktträger bei, so daß eine Lageänderung des Kontaktstücks bis zur Verschweissung wirksam unterbunden ist. Außerdem kann dann der zu verprägende Bereich des Kontaktkörpers in die Sicke geprägt werden, womit das vom Kontaktkörper stammende, verprägte Material von der Sicke aufgenommen wird. Durch entsprechende Dimensionierung der Sicke läßt es sich erreichen, daß das gesamte verprägte Material des Kontaktkörpers in der Sicke befindlich ist und daß das verprägte Material dann ungefähr eben mit der Oberfläche der zweiten Seite des Kontaktträgers planiert werden kann. Gegebenenfalls kann der zu verprägende Bereich vor dem Verprägen am überstehenden Kontaktkörper noch eingeschält werden, um das Verprägen zu erleichtern. Wird der Laserstrahl im gesamten auf den verprägten Bereich fokussiert, so umfaßt die Schweißzone des Schweißpunkts den verprägten Bereich in der Sicke, wodurch eine besonders sichere Befestigung des Kontaktkörpers am Kontaktträger erzielt wird.

Es kann sich gegebenenfalls anbieten, den Kontaktkörper an mehreren Stellen mit dem Kontaktträger zu verprägen und zu verschweissen, um die Befestigung des Kontaktkörpers am Kontaktträger noch weiter zu verbessern. In der Regel reicht es dafür aus, den Kontaktkörper an zwei Bereichen, die vorzugsweise einander ungefähr gegenüberliegen, mit der zweiten Seite des Kontaktträgers zu verprägen und zu verschweissen, wobei der jeweilige zu verprägende Bereich sich insbesondere an dem Teil des Kontaktkörpers befinden kann, der sich an die freiliegende Kontaktfläche anschließt. Um die Fertigungszeiten möglichst gering zu halten, kann man das Verprägen durch eine entsprechende Ausgestaltung des Prägewerkzeugs an den beiden Bereichen gleichzeitig in einem Fertigungsschritt vornehmen. Ebenso kann die Verschweissung an den beiden Bereichen gleichzeitig erfolgen, indem beispielsweise der Laserstrahl in zwei Teilstrahlen aufgeteilt wird und die Teilstrahlen auf jeweils einen der Bereiche fokussiert werden. Weiter kann es vorteilhaft sein, an der der freien Kontaktfläche gegenüberliegenden Seite zwischen dem Kontaktkörper und dem Kontaktträger wenigstens einen freien Raum in der Ausnehmung zur Aufnahme von verdrängtem Material des Kontaktkörpers anzuordnen, wodurch das Einbringen von Spannungen in den Kontaktträger beim Verprägen verhindert wird.

Um die Rückstreuverluste, die die für die eigentliche Verschweissung zur Verfügung stehende Energie verringern, möglichst klein zu halten, ist es vorteilhaft, wenn der Laserstrahl für den Schweißpunkt im wesentlichen ungefähr senkrecht auf die Oberfläche des verprägten Bereichs gerichtet ist. Ist der verprägte Bereich ungefähr plan zur Oberfläche des Kontaktträgers, so kann der Laserstrahl dann in einfacher Weise ungefähr senkrecht zur zweiten Seite des Kontaktträgers ausgerichtet werden. Im allgemeinen wird man den Schweißpunkt durch einen gepulsten Laserstrahl erzeugen, wobei die Pulsdauer auf die für die Erzeugung des Schweißpunkts benötigte Energie und gegebenenfalls die Taktzeit für die Fertigungsschritte abgestimmt ist.

Die mit der Erfindung erzielten Vorteile bestehen insbesondere darin, daß eine sichere Befestigung des Kontakts am Kontaktträger erzielt wird. Dadurch wird die Gefahr gebannt, daß der Kontakt sich bei den nachfolgenden Fertigungsschritten vom Kontaktträger löst, womit ein nicht funktionfähiges Kontaktsystem resultieren würde. Letztendlich wird dadurch der Ausschuß bei der Herstellung des Schalters gesenkt. Außerdem wird die Genauigkeit der Plazierung der Kontakte am Kontaktträger gesteigert, womit eine beträchtliche Qualitätsverbesserung erreicht wird. Mit Hilfe des erfindungsgemäßen Herstellungsverfahrens läßt sich zudem die Herstellung des Kontaktsystems vollständig automatisieren. Dadurch wird auch ein beachtlicher Kostenvorteil erzielt.

Ausführungsbeispiele und Weiterbildungen der Erfindung sind in den Zeichnungen dargestellt und werden im folgenden näher beschrieben. Es zeigen
- Fig. 1: einen Längsschnitt durch einen elektrischen Schalter,
- Fig. 2: einen vergrößerten Ausschnitt des Kontaktsystems aus Fig. 1,
- Fig. 3: die Kontaktträger in Form eines Stanzgitters,
- Fig. 4: das Stanzgitter nach dem Anbringen der Kontakte,
- Fig. 5: den Querschnitt durch das Profil eines Drahtes aus Kontaktmaterial,
- Fig. 6: einen vergrößerten Ausschnitt entsprechend dem Bereich VI aus Fig. 3 nach dem Einbringen des Kontaktstücks in die Ausnehmung,
- Fig. 7: einen Schnitt entlang der Linie 7-7 aus Fig. 6,
- Fig. 8: einen Ausschnitt wie in Fig. 6 nach dem Prägen einer Sicke in den Kontaktträger,
- Fig. 9: einen Schnitt entlang der Linie 9-9 aus Fig. 8,
- Fig. 10: einen Ausschnitt wie in Fig. 6 nach dem Einschälen des zu verprägenden Bereichs am Kontaktkörper,
- Fig. 11: einen Schnitt entlang der Linie 11-11 aus Fig. 10,
- Fig. 12: einen Ausschnitt wie in Fig. 6 nach dem Verprägen des zu verprägenden Bereichs am Kontaktkörper,
- Fig. 13: einen Schnitt entlang der Linie 13-13 aus Fig. 12,
- Fig. 14: einen Ausschnitt wie in Fig. 6 beim Verschweissen,
- Fig. 15: einen Schnitt entlang der Linie 15-15 aus Fig. 14 und
- Fig, 16: einen Schnitt wie in Fig. 15 nach dem Verschweissen.

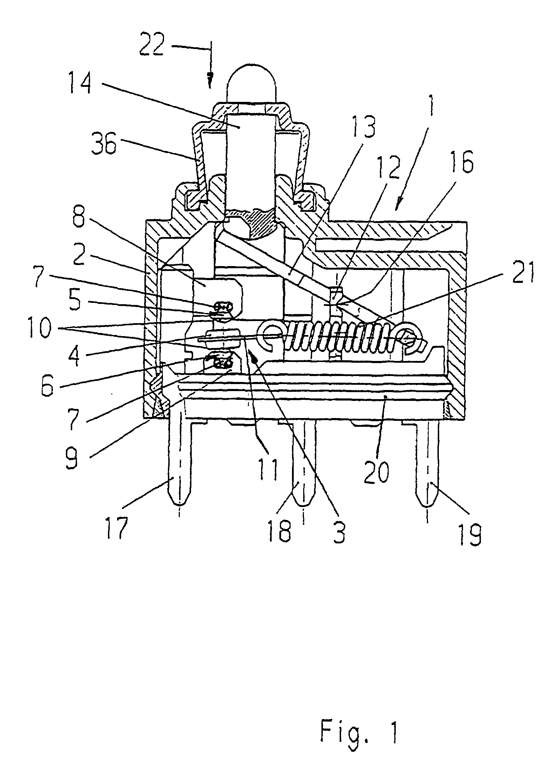

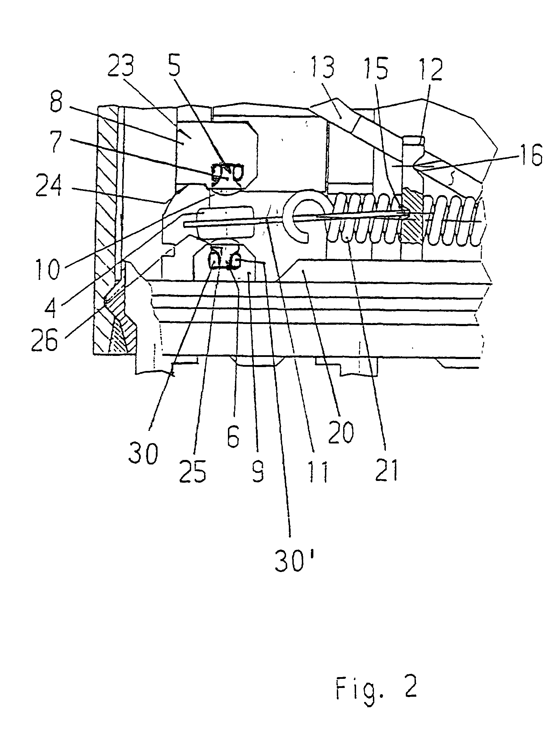

Ein als Schnappschalter ausgebildeter elektrischer Schalter 1 ist in Fig. 1 näher zu sehen. Der Schalter 1 besitzt ein Gehäuse 2 mit einem darin angeordneten Kontaktsystem 3. Das Kontaktsystem 3 besteht vorliegend aus zwei Festkontakten 5, 6 und einem zwischen den beiden Festkontakten 5, 6 befindlichen Schaltkontakt 4. Die Festkontakte 5, 6 bestehen wiederum aus einem Kontaktkörper 7 sowie einer Kontaktfläche 10 und sind mit ihrem Kontaktkörper 7 an je einem Kontaktträger 8, 9 derart befestigt, daß die Kontaktflächen 10 der Festkontakte 5, 6 einander gegenüberliegen. Der Schaltkontakt 4 ist an einer Kontaktzunge 11 angeordnet, die wiederum in einer ersten Aufnahme 15, die in Fig. 2 sichtbar ist, an einem Steg 12 bewegbar gelagert ist. Die Kontaktträger 8, 9 und der Steg 12 sind an einem Sockel 20 des Gehäuses 2 befestigt. Am Sockel 20 befinden sich weiter drei aus dem Gehäuse 2 ragende elektrische Anschlüsse 17, 18, 19 zur Zuführung der elektrischen Spannung, wobei der Anschluß 17 mit dem Kontaktträger 8, der Anschluß 18 mit dem Kontaktträger 9 und der Anschluß 19 mit dem Steg 12 in elektrischer Verbindung stehen.

Der Steg 12 besitzt eine weitere, zweite Aufnahme 16, an der ein zweiarmiger Innenhebel 13 drehbar gelagert ist. Der erste Hebelarm des Innenhebels 13 steht mit einem an der Oberseite in das Innere des Gehäuses 2 reichenden, mit einem Balg 36 zur Abdichtung versehenen Betätigungsorgan 14 in Wirkverbindung. Am zweiten Hebelarm des Innenhebels 13 ist ein Ende einer Zugfeder 21 befestigt. Das andere Ende der Zugfeder 21 ist in der Kontaktzunge 11 eingehängt. Das Betätigungsorgan 14 wirkt derart auf das betätigbare Kontaktsystem 3 ein, daß der Schaltkontakt 4 zwischen den beiden Festkontakten 5, 6 umschaltet und dabei in Anlage an die Kontaktfläche 10 des jeweiligen Festkontakts 5, 6 kommt.

Befindet sich das Betätigungsorgan 14 in der ungedrückten, in Fig. 1 gezeigten Stellung, so liegt der Schaltkontakt 4 an der Kontaktfläche 10 des Festkontakt 6 an, womit die Anschlüsse 18 und 19 elektrisch leitend verbunden sind. Wird das Betätigungsorgan 14 in Richtung des Pfeils 22 gedrückt, so wird der Innenhebel 13 entgegen dem Uhrzeigersinn um den Drehpunkt in der zweiten Aufnahme 16 bewegt, wobei der Innenhebel 13 wiederum auf die Zugfeder 21 einwirkt. Dadurch schnappt die Kontaktzunge 11 an einer bestimmten Stellung des Betätigungsorgans 14 um, so daß der Schaltkontakt 4 an der Kontaktfläche 10 des Festkontakts 5 anliegt, womit die Anschlüsse 17 und 19 elektrisch leitend verbunden sind.

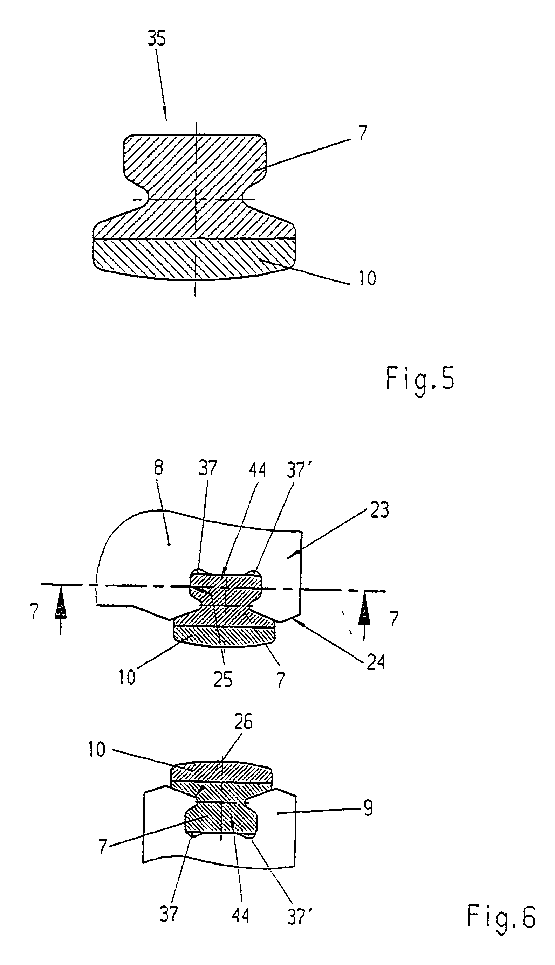

Wie insbesondere aus Fig. 2 entnehmbar ist, sind die Kontaktträger 8, 9 in der Art einer Leiterbahn mit einer ersten schmalen Seite 24 und einer weiteren, vorzugsweise ungefähr senkrecht zur ersten Seite 24 stehenden zweiten breiten Seite 23 ausgebildet. Dabei ist die erste Seite 24 des Kontaktträgers 8, 9 dem Schaltkontakt 4 zugewandt. An der zweiten Seite 23 ist eine Ausnehmung 25 mit einer dem Schaltkontakt 4 zugewandten, an der ersten Seite 24 befindlichen Öffnung 26 angeordnet. Der Kontaktkörper 7 des Festkontakts 5, 6 ist querschnittlich weitgehend korrespondierend zur Ausnehmung 25 ausgebildet, wie auch aus Fig. 5 hervorgeht, und ist derart in die Ausnehmung 25 eingesetzt, daß die mit dem Schaltkontakt 4 zusammenwirkende Kontaktfläche 10 des Festkontakts 5, 6 in der Öffnung 26 an der ersten Seite 24 des Kontaktträgers 8, 9 freiliegt. Vorzugsweise überragt die mit dem Schaltkontakt 4 zusammenwirkende Kontaktfläche 10 des Festkontakts 5, 6 die erste Seite 24 des Kontaktträgers 8, 9 in Richtung auf den Schaltkontakt 4. Es kann jedoch auch genügen, wenn die Kontaktfläche 10 in etwa eben mit der ersten Seite 24 des Kontaktträgers 8, 9 ist.

Im folgenden soll die Befestigung der Festkontakte 5, 6 am Kontaktträger 8, 9 näher erläutert werden, wobei in einzelnen der hierzu in Bezug genommenen Figuren lediglich der Festkontakt 5 gezeigt ist. Selbstverständlich gelten die Ausführungen gleichermaßen auch für den Festkontakt 6.

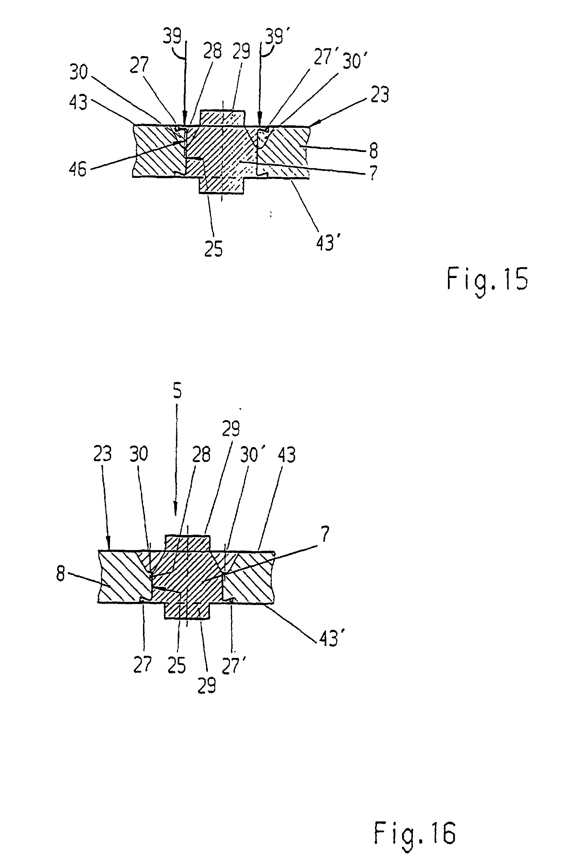

Wie weiter aus Fig. 16 hervorgeht, in der ein Querschnitt durch den am Kontaktträger 8 befestigten Festkontakt 5 gezeigt ist, steht der Kontaktkörper 7 an der zweiten Seite 23 des Kontaktträgers 8 in Bezug auf deren Oberfläche 43, 43' etwas über und ist am Kontaktträger 8 durch Verprägen und Verschweissen befestigt. Die Verprägung ist derart ausgeführt, wie auch näher aus Fig. 15 hervorgeht, daß lediglich ein dem Rand 28 der Ausnehmung 25 zugeordneter Bereich 27 des überstehenden Kontaktkörpers 7 mit der zweiten Seite 23 des Kontaktträgers 8 verprägt ist. Der Rest 29 des Kontaktkörpers 7 bleibt überstehend. Damit überlappt das verprägte Material des Kontaktkörpers 7 den Kontaktträger 8 im Bereich des Randes 28 an der Ausnehmung 25. Zusätzlich erfolgt noch eine Verschweissung in der Form einer Punktverschweissung zwischen dem Kontaktkörper 7 und dem Kontaktträger 8. Hierzu ist wenigstens ein mittels eines Laserstrahls 39 hergestellter Schweißpunkt 30 zumindestens teilweise auf dem verprägten Bereich 27 des Kontaktkörpers 7 derart angeordnet, daß die Schweißzone des Schweißpunkts 30 wenigstens teilweise den Grenzbereich zwischen dem Kontaktträger 8 und dem verprägten Bereich 27 erfaßt. Falls gewünscht, kann die Intensität des Laserstrahls 39 so gewählt werden, daß die Schweißzone noch tiefer in den Kontaktträger 8 eindringt und zusätzlich einen in Fig. 15 gezeigten Teil 46 des Kontaktkörpers 7, der sich innerhalb der Ausnehmung 25 befindet, in einer Umgebung des Randes 28 der Ausnehmung 25 erfaßt.

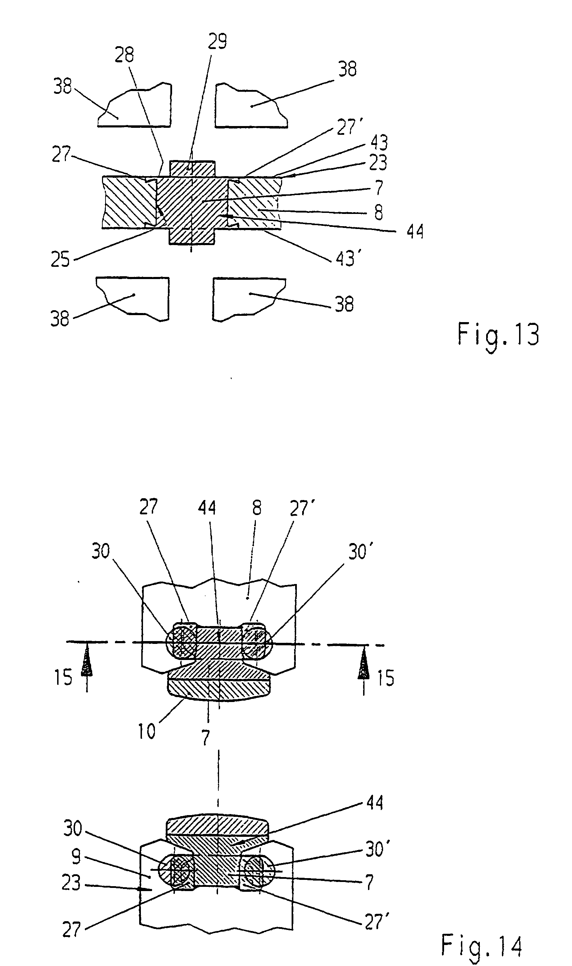

Es kann genügen, wenn am Festkontakt 5, 6 ein verprägter Bereich 27 sowie ein Schweißpunkt 30 angeordnet sind. Die Befestigung des Kontaktkörpers 7 am Kontaktträger 8, 9 kann weiter verbessert werden, wenn mehrere Schweißpunkte 30, 30' pro Festkontakt 5, 6 angeordnet sind. Als besonders geeignet hat es sich herausgestellt, den Kontaktkörper 7 an zwei einander gegenüberliegenden Bereichen 27, 27' mit der zweiten Seite 23 des Kontaktträgers 8, 9 zu verprägen und verschweißen. Der jeweilige verprägte Bereich 27, 27' ist zweckmäßigerweise, wie beispielsweise in Fig. 14 zu sehen ist, an dem Teil des Kontaktkörpers 7 befindlich, der sich an die freiliegende Kontaktfläche 10 anschließt. Selbstverständlich kann, falls gewünscht, auch an der weiteren Oberfläche 43' der zweiten Seite 23 eine Verprägung vorgenommen sein, wie aus Fig. 16 hervorgeht. Gegebenenfalls kann an der Oberfläche 43' zusätzlich eine Verschweissung des Kontaktkörpers 7 mit dem Kontaktträger 8 vorgenommen sein, um eine noch weiter verbesserte Befestigung zu erzielen. Befindet sich an der weiteren Oberfläche 43' der zweiten Seite 23 keine Verprägung, so braucht dort der Kontaktkörper 7 auch nicht überstehen, sondern dieser kann dann beispielsweise eben mit der Oberfläche 43' in der Ausnehmung 25 sein.

An der der freien Kontaktfläche 10 gegenüberliegenden Seite kann, wie in Fig. 6 gezeigt ist, zwischen dem Kontaktkörper 7 und dem Kontaktträger 8, 9 noch ein freier Raum 37 oder gegebenenfalls können auch mehrere freie Räume 37, 37' in der Ausnehmung 25 befindlich sein. Die freien Räume 37, 37' dienen zur Aufnahme von überschüssigem, verdrängtem Material des Kontaktkörpers 7 bei der Verprägung. Dadurch wird ein Aufbiegen und Aufweiten der Ausnehmung 25 beim Verprägen des Kontaktkörpers 7 vermieden, so daß die Gefahr des Herausfallen des Kontaktkörpers 7 aus der Ausnehmung 25 bis zur Verschweissung gebannt ist.

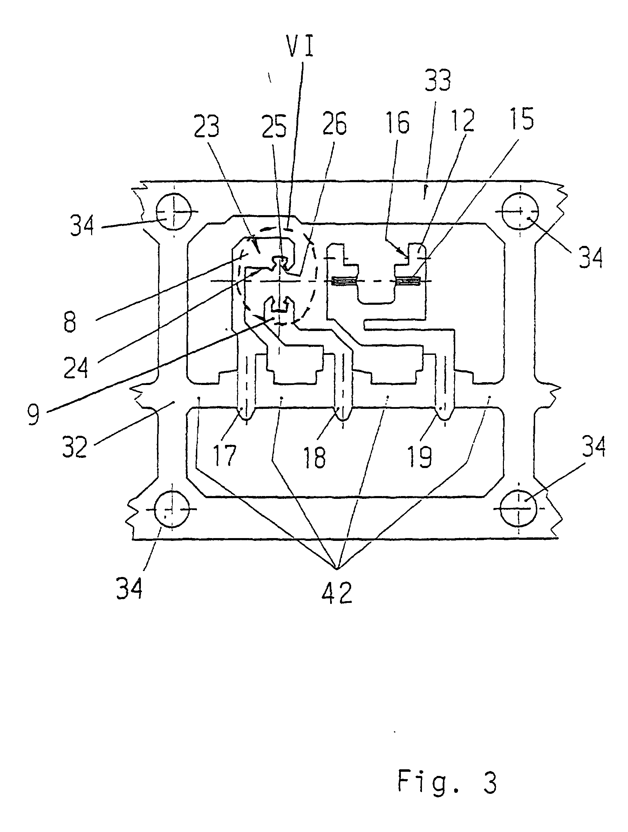

Zur Herstellung des Schalters 1 und insbesondere des Kontaktsystems 3 kann es sich anbieten, die Kontaktträger 8, 9 in der gewünschten Form sowie den Steg 12 als Stanzgitter 32 auszubilden, wie in Fig. 3 gezeigt ist. Das Stanzgitter 32 wird einschließlich der Ausnehmungen 25 in den Kontaktträgern 8, 9 aus einem Band 33, beispielsweise einem Kupferband, das eventuell in bestimmten Bereichen bereits galvanisch beschichtet sein kann, in gegebenenfalls mehreren Arbeitsschritten ausgestanzt. Dabei verbleiben die Stanzgitter 32 zunächst aufeinanderfolgend im Band 33 angeordnet. Das Band 33 wird beim Stanzvorgang noch mit Referenzlöchern 34 für die weiteren Bearbeitungsschritte und den Transport versehen. In dieses Stanzgitter 32 werden die Festkontakte 5, 6 eingebracht, für die ein in Fig. 5 gezeigter, korrespondierend zur Ausnehmung 25 profilierter Draht 35 verwendet wird. Der Draht 35 ist als Bimetall-Draht ausgebildet, wobei ein erstes Material als Kontaktkörper 7 und ein zweites Material als Kontaktfläche 10 dient. Beispielsweise kann es sich bei dem ersten Material für den Kontaktkörper 7 um eine Kupfer-Nickel-Eisen-Legierung und bei dem zweiten Material für die Kontaktfläche 10 um eine Silber-Nickel-Legierung handeln.

Die einzelnen Verfahrensschritte zur Herstellung der Festkontakte 5, 6 werden nachfolgend unter Bezugnahme auf die Fig. 6 bis 15 näher erläutert.

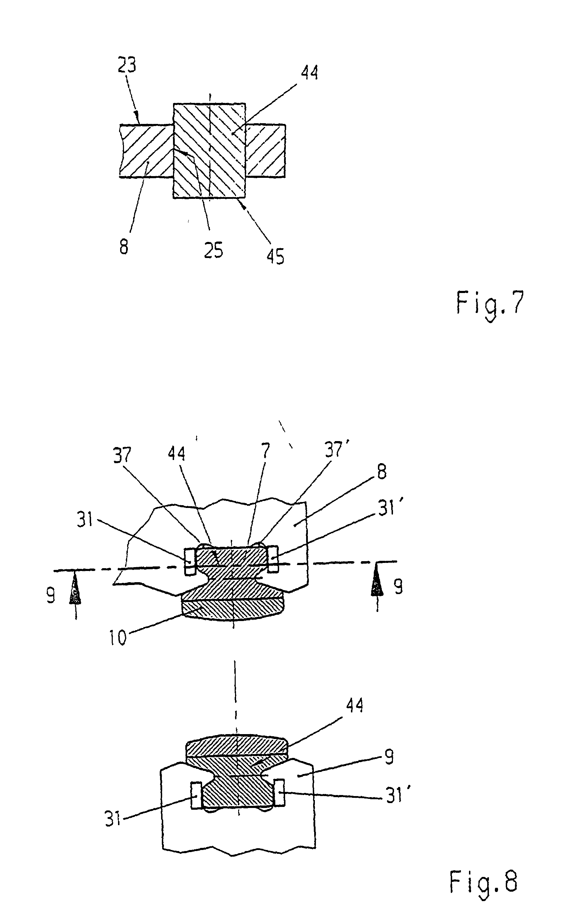

Das solchermaßen bearbeitete Band 33 mit den Stanzgittern 32 gemäß der Fig. 3 sowie der vorgefertigte Draht 35 aus dem Kontaktmaterial entsprechend der Fig. 5 werden einer nicht näher gezeigten, an sich bekannten Vorrichtung zugeführt. In dieser Vorrichtung werden Kontaktstücke 44 aus dem Draht 35 in der gewünschten Länge abgelängt. Wie anhand der Fig. 6 und 7 zu sehen ist, werden anschließend die Kontaktstücke 44 am Kontaktträger 8, 9 im Stanzgitter 32 angeordnet, indem in die Ausnehmung 25 das Kontaktstück 44 von der zweiten Seite 23 und damit ungefähr mit seiner Frontfläche 45 vertikal zur zweiten Seite 23 derart eingeführt wird, daß die Kontaktfläche 10 des Kontaktstücks 44 an der ersten Seite 24 des Kontaktträgers 8, 9 in der Öffnung 26 freiliegt. Die Länge der Kontaktstücke 44 ist so bemessen, daß der Kontaktkörper 7 wenigstens an der weiteren, vorzugsweise ungefähr senkrecht zur ersten Seite 24 stehenden zweiten Seite 23 des Kontaktträgers 8, 9 übersteht, wie in Fig. 7 zu sehen ist.

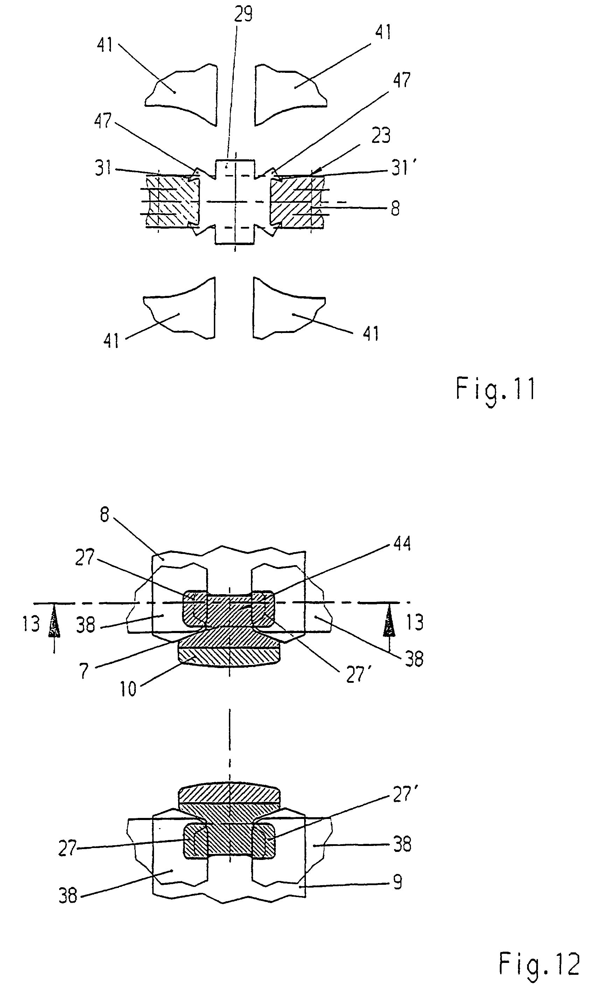

Anschließend erfolgt die Befestigung des Kontaktstücks 44 am Kontaktträger 8, 9. Zunächst wird mittels eines Prägewerkzeugs 38 der Kontaktkörper 7 am Kontaktträger 8, 9 verprägt, wie in Fig. 12 und 13 zu sehen ist. Das Prägewerkzeug 38 ist derart ausgestaltet, daß lediglich ein dem Rand 28 der Ausnehmuhg 25 zugeordneter Bereich 27 des überstehenden Kontaktkörpers 7 mit der zweiten Seite 23 des Kontaktträgers 8, 9 flach verprägt wird. Der Rest 29 des Kontaktkörpers 7 bleibt somit überstehend. Danach wird gemäß der Fig. 14 und 15 zur weiteren Befestigung wenigstens ein Schweißpunkt 30 mittels eines Laserstrahls 39 in Richtung auf die zweite Seite 23 des Kontaktträgers 8, 9 eingebracht, wobei es sich zweckmäßigerweise um einen gepulsten Laserstrahl handelt. Dabei wird der Laserstrahl 39 zumindestens teilweise auf den verprägten Bereich 27 des Kontaktkörpers 7 derart fokussiert, daß die Schweißzone des Schweißpunktes 30 den Grenzbereich zwischen dem Kontaktträger 8, 9 und dem verprägten Bereich 27 wenigstens teilweise erfaßt. Gegebenenfalls kann die Intensität des Laserstrahls 39 derart gesteigert werden, daß die Schweißzone noch tiefer in den Kontaktträger 8, 9 eindringt und, wie bereits erwähnt, zusätzlich einen Teil des Kontaktkörpers 7, der sich in der Ausnehmung 25 befindet, in einer Umgebung des Randes 28 der Ausnehmung 25 erfaßt. Dies ist in Fig. 15 mit dem Teil 46 der Schweißzone angedeutet. Aufgrund der Wärmeleitung besitzt der Schweißpunkt auf dem verprägten Bereich 27 einen etwas größeren Durchmesser als der Laserfokus.

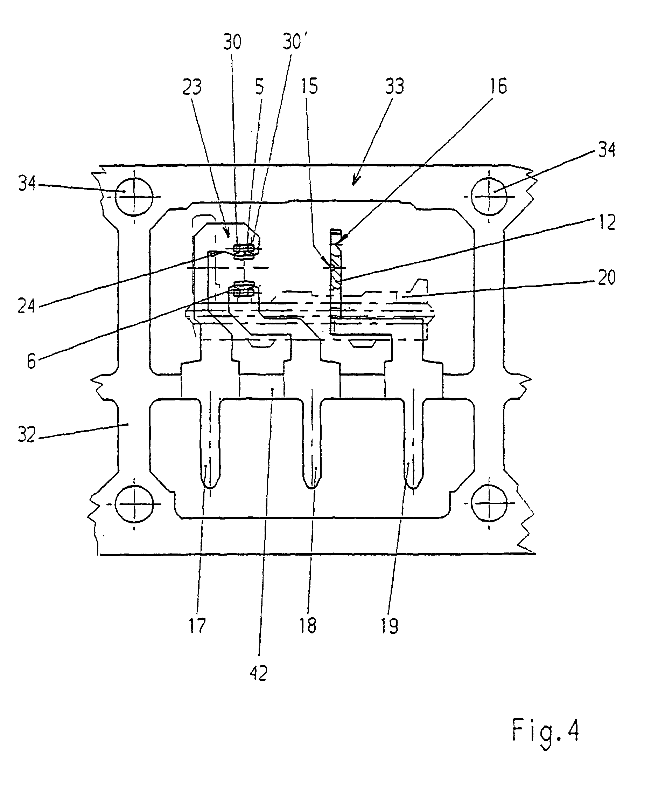

Nachdem die Festkontakte 5, 6 im Stanzgitter 32 eingebracht und befestigt sind, wird der Steg 12 um ca. 90 Grad senkrecht zur Ebene der Kontaktträger 8, 9 umgebogen und mit dem Sockel 20 in einer Spritzgußmaschine umspritzt, so daß die Stanzgitter 32 schließlich das in Fig. 4 gezeigte Aussehen besitzen. Anschließend können die Sockel 20 mit dem Stanzgitter 32 im Band 33 vereinzelt werden, wobei die dann nicht mehr benötigten, lediglich dem mechanischen Zusammenhalt dienenden Verbindungen 42 an den Anschlüssen 17, 18, 19 im Stanzgitter 32 durchtrennt werden. Schließlich kann dann die restliche Montage des Schalters 1 erfolgen.

Das beschriebene Herstellverfahren gewährleistet eine gleichbleibende, reproduzierbare Güte für die Befestigung der Festkontakte 5, 6 am Kontaktträger 8, 9, da aufgrund der Verprägung der Laserstrahl 39 im wesentlichen immer auf das gleiche Grundmaterial, nämlich auf das Material des Kontaktkörpers 7 fokussiert ist. Zudem ist das Grundmaterial noch nicht gealtert, da die Verschweissung im Anschluß an die Verprägung vorgenommen wird. Somit weist die Stelle, an der der Laserstrahl 39 auf das Grundmaterial einfällt, konstante optische Eigenschaften auf, so daß bei jedem Schweißpunkt 30 in den einzelnen aufeinanderfolgenden Stanzgittern 32 gleiche optische Verhältnisse herrschen, insbesondere ist das Reflexionsvermögen des verprägten Bereichs 27 gleichbleibend. Da die Laserleistung konstant gehalten wird, bleiben folglich auch der vom Grundmaterial reflektierte und absorbierte Anteil an der Laserstrahlung gleich, so daß letztendlich reproduzierbare Schweißpunkte 30 derselben Güte erzeugt werden. Dadurch wird vorteilhafterweise vermieden, daß für jeden einzelnen Schweißpunkt 30 eine neue Justierung der Laserstrahlen 39 erfolgen muß, um den die Verschweissung bewirkenden, absorbierten Anteil an der Laserstrahlung konstant zu halten. Somit kann auch das Fertigungsverfahren weitgehend automatisiert ablaufen.

Durch die Ausgestaltung des Herstellungsverfahrens wird weiter erreicht, daß das Grundmaterial des Kontaktkörpers 7 beim Verschweissen nicht ohne Eingehen einer Verbindung mit dem Kontaktträger 8, 9 weggeschmolzen wird, und daß keine Hohlkehle in der Schweißzone entstehen kann. Das Herstellungsverfahren gestattet im Besonderen, daß entsprechend Fig. 15 der Laserstrahl 39 für den Schweißpunkt 30 im wesentlichen senkrecht zur Oberfläche 43 der zweiten Seite 23 des Kontaktträgers 8, 9 auf den verprägten Bereich 27 gerichtet werden kann, ohne daß die Gefahr besteht, daß der überstehende Rest 29 oder ein sonstiger unerwünschter Teil des Kontaktkörpers 7 beim Verschweissen mit erfaßt wird und dadurch der eigentlichen Verschweissung Energie entzogen wird. Somit ist sichergestellt, daß die Schweißzone des Schweißpunktes 30 den Grenzbereich zwischen dem Kontaktträger 8, 9, dem verprägten Bereich 27 sowie gegebenenfalls dem Teil 46 des Kontaktkörpers 7 gleichbleibend umfaßt, was dazu beiträgt, eine reproduzierbare, gleichbleibende Verschweissung zu erzielen. Obwohl die senkrechte Ausrichtung aus genannten Gründen bevorzugt ist, kann der Laserstrahl 39, falls dies aus werkzeugtechnischen oder sonstigen Gründen wünschenswert ist, auch geneigt unter einem Winkel zur Oberfläche 43 der zweiten Seite 23 des Kontaktträgers 8, 9 ausgerichtet werden.

Die beschriebenen Hersteilungsschritte können auch entsprechend erweitert werden, falls gemäß der Fig. 14 und 15 mehrere Schweißpunkte 30, 30' pro Festkontakt 5, 6 angeordnet sind. Wie bereits erwähnt, kann der Kontaktkörper 7 an zwei, vorzugsweise einander gegenüberliegenden Bereichen 27, 27' mit der zweiten Seite 23 des Kontaktträgers 8, 9 verprägt und verschweißt werden, wobei der jeweilige Bereich 27, 27' insbesondere an dem Teil des Kontaktkörpers 7 angeordnet wird, der an die freiliegende Kontaktfläche 10 anschließt. Wie in Fig. 12 und 13 gezeigt ist, ist bevorzugterweise das Prägewerkzeug 38 so ausgestaltet, daß das Verprägen an den beiden Bereichen 27, 27' jeweils gleichzeitig vorgenommen wird und zwar jeweils an beiden Oberflächen 43, 43' der zweiten Seite 23. Ebenso kann das Verschweissen an den Bereichen 27, 27' gleichzeitig vorgenommen werden, indem der Laserstrahl in die entsprechende Anzahl von einzelnen Teilstrahlen 39, 39' aufgeteilt wird, wie aus Fig. 15 hervorgeht. In der Regel genügt das Verschweissen der verprägten Bereiche 27, 27' an einer Oberfläche 43 der zweiten Seite 23. Falls gewünscht kann aber auch noch zusätzlich eine Verschweissung an der weiteren Oberfläche 43' vorgenommen werden.

In einer Weiterbildung der Erfindung kann gemäß Fig. 6, wie bereits erwähnt, an der der freien Kontaktfläche 10 gegenüberliegenden Seite zwischen dem Kontaktkörper 7 und dem Kontaktträger 8, 9 wenigstens ein freier Raum 37, 37' in der Ausnehmung 25 zur Aufnahme von verprägtem Material des Kontaktkörpers 7 eingebracht werden. Die Verprägung erfolgt zweckmäßigerweise derart, daß der gesamte verprägte Bereich 27, 27' des Kontaktkörpers 7 in Bezug auf die Oberfläche 43, 43' der zweiten Seite 23 des Kontaktträgers 8, 9 eine im wesentlichen parallele, plane Fläche bildet, wie auch in Fig. 13 zu sehen ist, so daß die Streuverluste des Laserstrahls 39 minimiert sind. Besonders bevorzugt ist dabei, daß diese Fläche eben zur zweiten Seite 23 des Kontaktträgers 8, 9 verläuft und die von der Schweißzone des Schweißpunktes 30 umfaßte Fügezone überdeckt, die durch den miteinander zu verbindenden Teil des Grenzbereichs zwischen dem Kontaktträger 8, 9, dem verprägten Bereich 27, 27' und gegebenenfalls dem Teil 46 gebildet wird. Zur Herstellung dieser planen Fläche besitzt das Prägewerkzeug 38 eine derartige Ausgestaltung, daß der gesamte verprägte Bereich 27, 27' des Kontaktkörpers 7 in Bezug zur Oberfläche 43, 43' der zweiten Seite 23 beim Verprägen auf eine Höhe planiert wird. Das Verprägen bzw. Planieren dient auch zur Unterstützung der Einspannung des Kontaktstücks 44 in der Ausnehmung 25 bis zur Verschweissung. So werden durch das Verprägen bzw. Planieren Zugspannungen verhindert, die zu einem Verdrehen des Kontaktstücks 44 in der Ausnehmung 25 führen können. Weiter können fertigungsbedingte Spalte aufgrund von Toleranzen zwischen dem Kontaktstück 44 und der Ausnehmung 25 auftreten. Durch das Verprägen bzw. Planieren wird sichergestellt, daß kein Durchfallen von Schmelze in solchen Spalten aufgrund von Kapillarkräften während des Verschweissens zu befürchten ist.

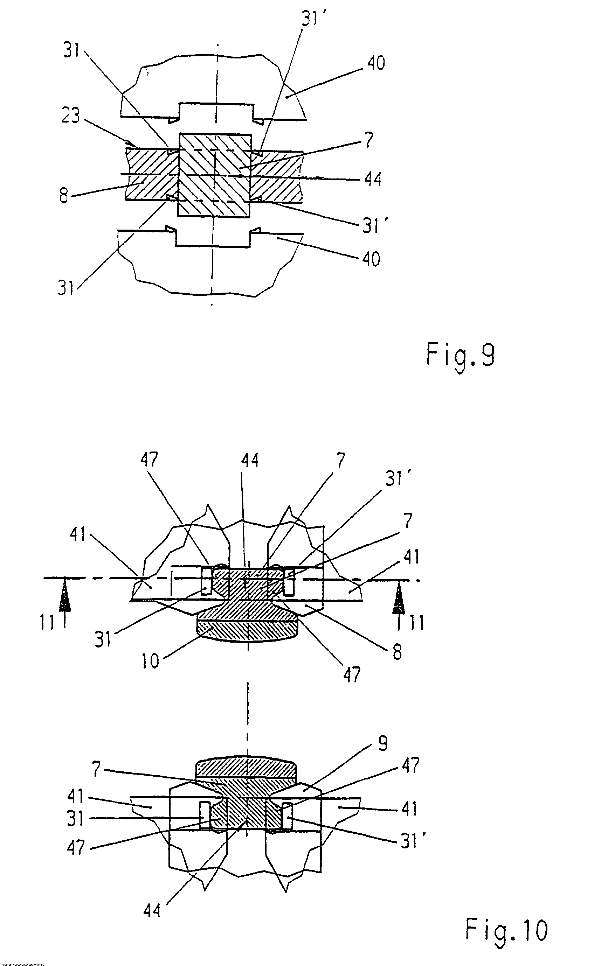

In weiterer Ausbildung können zwischen dem Einbringen des Kontaktstücks 44 in die Ausnehmung 25 und dem Verprägen des Bereichs 27, 27' mit dem Kontaktträger 8, 9 noch zusätzliche Schritte des Herstellungsverfahrens vorgesehen sein. Wie in Fig. 8 und 9 zu sehen ist, kann eine Sicke 31, 31' im Kontaktträger 8, 9 an der zweiten Seite 23 wenigstens entlang eines Teilbereichs des Kontaktkörpers 7 eingebracht sein. In diese Sicke 31, 31' wird dann der zu verprägende Bereich 27, 27' am überstehenden Kontaktkörper 7 geprägt. Das verprägte Material des Kontaktkörpers 7 wird von der Sicke 31, 31' aufgenommen, wobei beim Verprägen das in die Sicke 31, 31' geprägte Material ungefähr eben mit der Oberfläche 43, 43' der zweiten Seite 23 des Kontaktträgers 8, 9 planiert werden kann, wie bereits anhand der Fig. 12 und 13 erläutert ist. Bevorzugterweise umfaßt dann die Schweißzone des Schweißpunktes 30, 30' den verprägten Bereich 27, 27' in der Sicke 31, 31'. Die Sicke 31, 31' wird hergestellt, indem nach dem Einführen des Kontaktstücks 44 in die Ausnehmung 25 mittels eines entsprechend gestalteten Werkzeugs 40 die Sicke 31, 31' wenigstens um einen Teilbereich des Kontaktkörpers 7 in den Kontaktträger 8, 9 an der zweiten Seite 23 geprägt wird. Durch die Sicke 31, 31' wird unter anderem bewirkt, daß der Lochleibungsdruck auf den Kontaktkörper 7 erhöht wird, was wiederum zur Verbesserung der Einspannung des Kontaktstücks 44 in der Ausnehmung 25 beiträgt.

Gegebenenfalls kann nach dem Einbringen der Sicke 31, 31' am überstehenden Kontaktkörper 7 ein Einschälen des zu verprägenden Bereichs 27, 27' des Kontaktkörpers 7 mittels eines Schälwerkzeuges 41 erfolgen, wie in Fig. 10 und 11 gezeigt ist, um das nachfolgende Verprägen zu erleichtern. Das eingeschälte Material 47 des Kontaktkörpers 7 kann durch das Schälwerkzeug 41 bereits in Richtung zur Sicke 31, 31' geformt werden. Anschließend erfolgt dann das bereits beschriebene Verprägen und Planieren mittels des Prägewerkzeugs 38, so daß dieses Material 47 ungefähr eben mit der Oberfläche 43, 43' der zweiten Seite 23 des Kontaktträgers 8, 9 ist, sowie das Verschweissen, indem der Laserstrahl 39, 39' auf den verprägten Bereich 27, 27' an der Sicke 31, 31' fokussiert wird.

Die Erfindung ist nicht auf die beschriebenen und dargestellten Ausführungsbeispiele beschränkt. Sie umfaßt vielmehr auch alle fachmännischen Weiterbildungen im Rahmen des Schutzbereichs der Patentansprüche. So kann das erfindungsgemäße Verfahren nicht nur zur Herstellung von Festkontakten sondern auch zur Herstellung von sonstigen Kontakten eines Kontaktsystems, beispielsweise auch für den Schaltkontakt, verwendet werden.

### Bezugszeichen-Liste:

- 1:: elektrischer Schalter
- 2:: Gehäuse
- 3:: Kontaktsystem
- 4:: Schaltkontakt
- 5,6:: Festkontakt
- 7:: Kontaktkörper
- 8,9:: Kontaktträger
- 10:: Kontaktfläche
- 11:: Kontaktzunge
- 12:: Steg
- 13:: Innenhebel
- 14:: Betätigungsorgan
- 15:: erste Aufnahme (für Kontaktzunge am Steg)
- 16:: zweite Aufnahme (für Innenhebel am Steg)
- 17,18, 19:: elektrischer Anschluß
- 20:: Sockel
- 21:: Zugfeder
- 22:: Richtungspfeil (für Betätigungsorgan)
- 23:: zweite Seite (von Kontaktträger)
- 24:: erste Seite (von Kontaktträger)
- 25:: Ausnehmung
- 26:: Öffnung
- 27,27':: verprägter Bereich
- 28:: Rand (der Ausnehmung)
- 29:: überstehender Rest (des Kontaktkörpers)
- 30,30':: Schweißpunkt
- 31,31':: Sicke
- 32:: Stanzgitter
- 33:: Band (vom Stanzgitter)
- 34:: Referenz loch
- 35:: Draht (für Kontaktmaterial)
- 36:: Balg
- 37,37':: freier Raum (in Ausnehmung)
- 38:: Prägewerkzeug
- 39,39':: Laserstrahl
- 40:: Werkzeug (für Sicke)
- 41:: Schälwerkzeug
- 42:: Verbindung
- 43,43':: Oberfläche (der zweiten Seite)
- 44:: Kontaktstück
- 45:: Frontfläche (des Kontaktstücks)
- 46:: Teil (der Schweißzone)
- 47:: eingeschältes Material

## Patentansprüche

1. Elektrischer Schalter mit einem Kontaktsystem (3), wobei ein aus einem Kontaktkörper (7) und einer Kontaktfläche (10) bestehender Kontakt (5, 6) des Kontaktsystems (3) derart in einer Ausnehmung (25) an einem Kontaktträger (8, 9) angeordnet ist, daß die Kontaktfläche (10) am Kontaktträger (8, 9) freiliegt und der Kontaktkörper (7) an einer Seite (23) des Kontaktträgers (8, 9) übersteht, und wobei der Kontaktkörper (7) am Kontaktträger (8, 9) durch Verprägen und Verschweißen mittels eines Laserstrahls (39, 39') befestigt ist, **dadurch gekennzeichnet, daß** lediglich ein dem Rand (28) der Ausnehmung (25) zugeordneter Bereich (27, 27') des überstehenden Kontaktkörpers (7) mit der Seite (23) des Kontaktträgers (8, 9) verprägt ist, und daß wenigstens ein mittels des Laserstrahls (39, 39') hergestellter Schweißpunkt (30, 30') zumindestens teilweise auf dem verprägten Bereich (27, 27') des Kontaktkörpers (7) derart angeordnet ist, daß die Schweißzone des Schweißpunktes (30, 30') wenigstens teilweise den Grenzbereich zwischen dem Kontaktträger (8, 9), dem verprägten Bereich (27, 27') und gegebenenfalls einem Teil (46) des Kontaktkörpers (7), der sich in der Ausnehmung (25) befindet, in einer Umgebung des Randes (28) der Ausnehmung (25) erfaßt.

2. Elektrischer Schalter nach Anspruch 1, **dadurch gekennzeichnet, daß** der verprägte Bereich (27, 27') des Kontaktkörpers (7) in Bezug auf die Oberfläche (43, 43') der Seite (23) des Kontaktträgers (8, 9) eine im wesentlichen parallele, plane Fläche bildet, die insbesondere eben mit der Oberfläche (43, 43') der Seite (23) des Kontaktträgers (8, 9) verläuft, wobei vorzugsweise die plane Fläche des verprägten Bereichs (27, 27') die von der Schweißzone des Schweißpunktes (30, 30') umfaßte Fügezone überdeckt.

3. Elektrischer Schalter nach Anspruch 1 oder 2, **dadurch gekennzeichnet, daß** eine Sicke (31, 31') im Kontaktträger (8, 9) wenigstens entlang eines Teilbereichs des Kontaktkörpers (7) befindlich ist, daß vorzugsweise der zu verprägende Bereich (27, 27') des Kontaktkörpers (7) in die Sicke (31, 31') geprägt ist, daß weiter vorzugsweise das in die Sicke (31, 31') geprägte Material des Kontaktkörpers (7) ungefähr eben mit der Oberfläche (43, 43') der Seite (23) des Kontaktträgers (8, 9) ist, und daß noch weiter vorzugsweise die Schweißzone des Schweißpunkts (30, 30') den verprägten Bereich (27, 27') in der Sicke (31, 31') umfaßt.

4. Elektrischer Schalter nach Anspruch 1, 2 oder 3, **dadurch gekennzeichnet, daß** der Kontaktkörper (7) an zwei, vorzugsweise einander gegenüberliegenden Bereichen (27, 27') mit der Seite (23) des Kontaktträgers (8, 9) verprägt und verschweißt ist, wobei der jeweilige Bereich (27, 27') insbesondere an dem Teil des Kontaktkörpers (7) befindlich ist, der an die freiliegende Kontaktfläche (10) anschließt, und daß vorzugsweise an der der freien Kontaktfläche (10) gegenüberliegenden Seite zwischen dem Kontaktkörper (7) und dem Kontaktträger (8, 9) ein freier Raum (37, 37') in der Ausnehmung (25) zur Aufnahme von beim Verprägen verdrängtem Material des Kontaktkörpers (7) befindlich ist.

5. Verfahren zur Herstellung eines elektrischen Schalters nach einem der Ansprüche 1 bis 4, wobei ein einen Kontaktkörper (7) und eine Kontaktfläche (10) besitzendes Kontaktstück (44) in eine Ausnehmung (25) an einem Kontaktträger (8, 9) des Kontaktsystems (3) derart eingeführt wird, daß die Kontaktfläche (10) am Kontaktträger (8, 9) freiliegt und der Kontaktkörper (7) an einer Seite (23) des Kontaktträgers (8, 9) übersteht, und wobei anschließend der Kontaktkörper (7) am Kontaktträger (8, 9) durch Verprägen und Verschweißen mittels eines Laserstrahls (39, 39') befestigt wird, **dadurch gekennzeichnet, daß** lediglich ein dem Rand (28) der Ausnehmung (25) zugeordneter Bereich (27, 27') des überstehenden Kontaktkörpers (7) mit der Seite (23) des Kontaktträgers (8, 9) verprägt wird, und daß wenigstens ein Schweißpunkt (30, 30') mittels des Laserstrahls (39, 39') in Richtung auf die Seite (23) des Kontaktträgers (8, 9) eingebracht wird, wobei der Laserstrahl (39, 39') zumindestens teilweise auf den verprägten Bereich (27, 27') des Kontaktkorpers (7) derart fokussiert ist, daß die Schweißzone des Schweißpunktes (30, 30') wenigstens teilweise den Grenzbereich zwischen dem Kontaktträger (8, 9), dem verprägten Bereich (27, 27') und gegebenenfalls einem Teil (46) des Kontaktkörpers (7), der sich in der Ausnehmung (25) befindet, in einer Umgebung des Randes (28) der Ausnehmung (25) erfaßt.

6. Verfahren nach Anspruch 5, **dadurch gekennzeichnet, daß** der verprägte Bereich (27, 27') des Kontaktkörpers (7) in Bezug auf die Oberfläche (43, 43') der Seite (23) des Kontaktträgers (8, 9) beim Verprägen auf eine Höhe planiert wird, so daß der verprägte Bereich (27, 27') eine im wesentlichen ebene, zur Seite (23) des Kontaktträgers (8, 9) parallele Fläche bildet, die insbesondere eben mit der Oberfläche (43, 43') der Seite (23) des Kontaktträgers (8, 9) verläuft, wobei vorzugsweise die planierte Fläche des verprägten Bereichs (27, 27') die von der Schweißzone des Schweißpunktes (30, 30') umfaßte Fügezone überdeckt.

7. Verfahren nach Anspruch 5 oder 6, **dadurch gekennzeichnet, daß** nach Einführen des Kontaktstücks (44) in die Ausnehmung (25) am Kontaktträger (8, 9) eine Sicke (31, 31') wenigstens entlang eines Teilbereichs des Kontaktkörpers (7) in den Kontaktträger (8, 9) geprägt wird, wobei insbesondere der Lochleibungsdruck auf den Kontaktkörper (7) in der Ausnehmung (25) erhöht wird, daß vorzugsweise der zu verprägende Bereich (27, 27') des Kontaktkörpers (7) in die Sicke (31, 31') geprägt wird, wobei gegebenenfalls der zu verprägende Bereich (27, 27') vor dem Verprägen am überstehenden Kontaktkörper (7) eingeschält wird, daß weiter vorzugsweise das in die Sicke (31, 31') geprägte Material des Kontaktkörpers (7) derart planiert wird, daß dieses Material ungefähr eben mit der Oberfläche (43, 43') der Seite (23) des Kontaktträgers (8, 9) ist, und daß noch weiter vorzugsweise der Laserstrahl (39, 39') auf den verprägten Bereich (27, 27') in der Sicke (31, 31') fokussiert wird.

8. Verfahren nach Anspruch 5, 6 oder 7, **dadurch gekennzeichnet, daß** der Kontaktkörper (7) an zwei, vorzugsweise einander gegenüberliegenden Bereichen (27, 27') mit der Seite (23) des Kontaktträgers (8, 9) verprägt und verschweißt wird, wobei der jeweilige Bereich (27, 27') insbesondere an dem Teil des Kontaktkörpers (7) angeordnet wird, der an die freiliegende Kontaktfläche (10) anschließt, daß vorzugsweise das Verprägen und anschließend das Verschweissen an beiden Bereichen (27, 27') jeweils gleichzeitig vorgenommen wird, und daß weiter vorzugsweise an der der freien Kontaktfläche (10) gegenüberliegenden Seite zwischen dem Kontaktkörper (7) und dem Kontaktträger (8, 9) ein freier Raum (37, 37') in der Ausnehmung (25) zur Aufnahme von beim Verprägen verdrängtem Material des Kontaktkörpers (7) eingebracht ist.

9. Verfahren nach einem der Ansprüche 5 bis 8, **dadurch gekennzeichnet, daß** der Laserstrahl (39, 39') für den Schweißpunkt (30, 30') im wesentlichen senkrecht zur Oberfläche (43) der Seite (23) des Kontaktträgers (8, 9) auf den verprägten Bereich (27, 27') gerichtet ist, wobei der Schweißpunkt (30, 30') vorzugsweise durch einen gepulsten Laserstrahl (39, 39') erzeugt wird.

## Claims

1. Electric switch with a contact system (3), a contact (5, 6) of the contact system (3) consisting of a contact member (7) and a contact face (10) being arranged in a recess (25) on a contact carrier (8, 9) in such a way that the contact face (10) is exposed on the contact carrier (8, 9) and the contact member (7) projects at one side (23) of the contact carrier (8, 9), and the contact member (7) being fastened to the contact carrier (8, 9) by stamping and welding by means of a laser beam (39, 39'), **characterised in that** only a region (27, 27') of the projecting contact member (7) associated with the edge (28) of the recess (25) is stamped to the side (23) of the contact carrier (8, 9) and **in that** at least one weld point (30, 30') produced by means of the laser beam (39, 39') is at least partially arranged on the stamped region (27, 27') of the contact member (7) in such a way that the weld zone of the weld point (30, 30') at least partially encompasses the boundary region between the contact carrier (8, 9), the stamped region (27, 27') and optionally a portion (46) of the contact member (7) located in the recess (25), near the edge (28) of the recess (25).

2. Electric switch according to claim 1, **characterised in that** the stamped region (27, 27') of the contact member (7) forms a plane face which is substantially parallel to the surface (43, 43') of the side (23) of the contact carrier (8, 9), which face in particular extends level with the surface (43, 43') of the side (23) of the contact carrier (8, 9), the plane face of the stamped region (27, 27') preferably covering the joining zone encompassed by the weld zone of the weld point (30, 30').

3. Electric switch according to claim 1 or 2, **characterised in that** a bead (31, 31') is located in the contact carrier (8, 9) at least along a partial region of the contact member (7), **in that** the region to be stamped (27, 27') of the contact member (7) is preferably stamped into the bead (31, 31') **in that** the material of the contact member (7) stamped into the bead (31, 31') is also preferably level with the surface (43, 43') of the side (23) of the contact carrier (8, 9), and **in that** the weld zone of the weld point (30, 30') also preferably encompasses the stamped region (27, 27') in the bead (31, 31').

4. Electric switch according to claim 1, 2 or 3, **characterised in that** the contact member (7) is stamped and welded at two, preferably opposing, regions (27, 27') to the side (23) of the contact carrier (8, 9), the respective region (27, 27') in particular being located on the portion of the contact member (7) which adjoins the exposed contact face (10), and **in that** between the contact member (7) and the contact carrier (8, 9), preferably at the side opposing the free contact face (10), a free space (37, 37') is located in the recess (25) for receiving material of the contact member (7) displaced during stamping.

5. Process for producing an electric switch according to any one of claims 1 to 4, a contact piece (44) comprising a contact member (7) and a contact face (10) being inserted into a recess (25) on a contact carrier (8, 9) of the contact system (3) in such a way that the contact face (10) on the contact carrier (8, 9) is exposed and the contact member (7) projects at one side (23) of the contact carrier (8, 9), and the contact member (7) being subsequently fastened to the contact carrier (8, 9) by stamping and welding by means of a laser beam (39, 39'), **characterised in that** only a region (27, 27') of the projecting contact member (7) associated with the edge (28) of the recess (25) is stamped to the side (23) of the contact carrier (8, 9), and **in that** at least one weld point (30, 30') is introduced by means of the laser beam (39, 39') in the direction of the side (23) of the contact carrier (8, 9), the laser beam (39, 39') being focused at least partially onto the stamped region (27, 27') of the contact member (7) in such a way that the weld zone of the weld point (30, 30') at least partially encompasses the boundary region between the contact carrier (8, 9), the stamped region (27, 27') and optionally a portion (46) of the contact member (7) located in the recess (25), near the edge (28) of the recess (25).

6. Process according to claim 5, **characterised in that** during stamping the stamped region (27, 27') of the contact member (7) is levelled in relation to the surface (43, 43') of the side (23) of the contact carrier (8, 9) to a height so the stamped region (27, 27') forms. a substantially level face parallel to the side (23) of the contact carrier (8, 9) which, in particular, extends level with the surface (43, 43') of the side (23) of the contact carrier (8, 9), the levelled face of the stamped region (27, 27') preferably covering the joining zone encompassed by the weld zone of the weld point (30, 30').

7. Process according to claim 5 or 6, **characterised in that** after inserting the contact piece (44) into the recess (25) on the contact carrier (8, 9) a bead (31, 31') is stamped at least along a partial region of the contact member (7) into the contact carrier (8, 9), the pressure on the face of the hole on the contact member (7) in the recess (25) in particular being increased, **in that** preferably the region (27, 27') of the contact member (7) to be stamped is stamped into the bead (31', 31'), the region (27, 27') to be stamped optionally being pared prior to being stamped on the projecting contact member (7), **in that** the material of the contact member (7) stamped into the bead (31, 31') is also preferably levelled in such a way that this material is approximately level with the surface (43, 43') of the side (23) of the contact carrier (8, 9), and **in that** the laser beam (39, 39') is also preferably focussed on the stamped region (27, 27') in the bead (31, 31').

8. Process according to claim 5, 6 or 7, **characterised in that** the contact carrier (7) is stamped and welded at two, preferably opposing, regions (27, 27') to the side (23) of the contact carrier (8, 9), the respective region (27, 27') in particular being arranged on the portion of the contact member (7) which adjoins the exposed contact face (10), **in that** stamping and subsequently welding to the two regions (27, 27') respectively is preferably carried out simultaneously, and **in that** between the contact member (7) and the contact carrier (8, 9), preferably also on the side opposing the free contact face (10), a free space (37, 37') is introduced into the recess (25) for receiving material of the contact member (7) displaced during stamping.

9. Process according to any one of claims 5 to 8, **characterised in that** the laser beam (39, 39') for the weld point (30, 30') is substantially directed vertically to the surface (43) of the side (23) of the contact carrier (8, 9) onto the stamped region (27, 27'), the weld point (30, 30') preferably being produced by a pulsed laser beam (39, 39').

## Revendications

1. Commutateur électrique, comportant un système de contact (3), un contact (5, 6), constitué d'un corps de contact (7) et d'une surface de contact (10), du système de contact (3) étant agencé dans un évidement (25) sur un support de contact (8, 9), de sorte que la surface de contact (10) sur le support de contact (8, 9) est dégagée et le corps de contact (7) fait saillie sur un côté (23) du support de contact (8, 9), et le corps de contact (7) étant fixé sur le support de contact (8, 9) par estampage et soudage au moyen d'un rayon laser (39, 39'),
**caractérisé en ce qu'**uniquement une zone (27, 27'), associée au bord (28) de l'évidement (25), du corps de contact en saillie (7) est estampée avec le côté (23) du support de contact (8, 9), et **en ce qu'**au moins un point de soudure (30, 30'), réalisé au moyen du rayon laser (39, 39'), est prévu au moins partiellement sur la zone estampée (27, 27') du corps de contact (7), de sorte que la zone de soudure du point de soudure (30, 30') couvre au moins partiellement la zone limite entre le support de contact (8, 9), la zone estampée (27, 27') et, le cas échéant, une partie (46) du corps de contact (7) qui se trouve dans l'évidement (25), dans l'entourage du bord (28) de l'évidement (25).

2. Commutateur électrique selon la revendication 1,
**caractérisé en ce que** la zone estampée (27, 27') du corps de contact (7), relativement à la surface (43, 43') du côté (23) du support de contact (8, 9), forme une surface plane généralement parallèle, qui s'étend en particulier à fleur de la surface (43, 43') du côté (23) du support de contact (8, 9), la surface plane de la zone estampée (27, 27') recouvrant avantageusement la zone de joint entourée par la zone du point de soudure (30, 30').

3. Commutateur électrique selon la revendication 1 ou 2,
**caractérisé en ce qu'**une moulure (31, 31') se trouve dans le support de contact (8, 9) au moins le long d'une zone partielle du corps de contact (7), **en ce que**, avantageusement, la zone à estamper (27, 27') du corps de contact (7) est estampée dans la moulure (31, 31'), **en ce que**, encore avantageusement, la matière, estampée dans la moulure (31, 31'), du corps de contact (7) est sensiblement à fleur de la surface (43, 43') du côté (23) du support de contact (8, 9), et **en ce que**, encore plus avantageusement, la zone du point de soudure (30, 30') comporte la zone estampée (27, 27') dans la moulure (31, 31').

4. Commutateur électrique selon la revendication 1, 2 ou 3,
**caractérisé en ce que** le corps de contact (7) est estampé et soudé en deux zones (27, 27') avantageusement opposées l'une à l'autre avec le côté (23) du support de contact (8, 9), la zone respective (27, 27') se trouvant en particulier sur la partie du corps de contact (7) qui se raccorde à la surface de contact dégagée (10), et ce que, avantageusement, sur le côté opposé à la surface de contact libre (10) entre le corps de contact (7) et le support de contact (8, 9), il se trouve un espace libre (37, 37') dans l'évidement (25) pour recevoir la matière, repoussée lors de l'estampage, du corps de contact (7).

5. Procédé pour fabriquer un commutateur électrique selon une des revendications 1 à 4, une pièce de contact (44) possédant un corps de contact (7) et une surface de contact (10) étant introduite dans un évidement (25) sur un support de contact (8, 9) du système de contact (3), de sorte que la surface de contact (10) sur le support de contact (8, 9) est dégagée et le corps de contact (7) fait saillie sur un côté (23) du support de contact (8, 9), et, ensuite, le corps de contact (7) étant fixé sur le support de contact (8, 9) par estampage et soudage au moyen d'un rayon laser (39, 39'),
**caractérisé en ce qu'**uniquement une zone (27, 27'), associée au bord (28) de l'évidement (25), du corps de contact en saillie (7) est estampée avec le côté (23) du support de contact (8, 9), et **en ce qu'**au moins un point de soudure (30, 30') est réalisé au moyen du rayon laser (39, 39') en direction du côté (23) du support de contact (8, 9), le rayon laser (39, 39') étant focalisé au moins partiellement sur la zone estampée (27, 27') du corps de contact (7) de sorte que la zone du point de soudure (30, 30') couvre au moins partiellement la zone limite entre le support de contact (8, 9), la zone estampée (27, 27') et, le cas échéant, une partie (46) du corps de contact (7) qui se trouve dans l'évidement (25), dans l'entourage du bord (28) de l'évidement (25).

6. Procédé selon la revendication 5,
**caractérisé en ce que** la zone estampée (27, 27') du corps de contact (7), relativement à la surface (43, 43') du côté (23) du support de contact (8, 9), est, lors de l'estampage, aplanie à une hauteur de sorte que la zone estampée (27, 27') forme une surface généralement plane, parallèle au côté (23) du support de contact (8, 9), qui s'étend en particulier à fleur de la surface (43, 43') du côté (23) du support de contact (8, 9), la surface aplanie de la zone estampée (27, 27') recouvrant avantageusement la zone de joint entourée par la zone du point de soudure (30, 30').

7. Procédé selon la revendication 5 ou 6,
**caractérisé en ce que**, après l'introduction de la pièce de contact (44) dans l'évidement (25) sur le support de contact (8, 9), une moulure (31, 31') est estampée au moins le long d'une zone partielle du corps de contact (7) dans le support de contact (8, 9), en particulier la pression diamétrale sur le corps de contact (7) dans l'évidement (25) étant augmentée, **en ce que**, avantageusement, la zone à estamper (27, 27') du corps de contact (7) est estampée dans la moulure (31, 31'), le cas échéant la zone à estamper (27, 27') étant coffrée avant l'estampage sur le corps de contact en saillie (7), **en ce que**, encore avantageusement, la matière, estampée dans la moulure (31, 31'), du corps de contact (7) est aplanie de sorte que cette matière est sensiblement à fleur de la surface (43, 43') du côté (23) du support de contact (8, 9), et **en ce que**, encore plus avantageusement, le rayon laser (39, 39') est focalisé sur la zone estampée (27, 27') dans la moulure (31, 31').

8. Procédé selon la revendication 5, 6 ou 7,
**caractérisé en ce que** le corps de contact (7) est estampé et soudé en deux zones (27, 27'), avantageusement opposées l'une à l'autre, avec le côté (23) du support de contact (8, 9), la zone respective (27, 27') étant agencée en particulier sur la partie du corps de contact (7) qui se raccorde à la surface de contact dégagée (10), **en ce que**, avantageusement, l'estampage et, ensuite, le soudage sont effectués simultanément, à chaque fois, sur les deux zones (27, 27'), et **en ce que**, encore avantageusement, sur le côté opposé à la surface de contact libre (10) entre le corps de contact (7) et le support de contact (8, 9), il est prévu un espace libre (37, 37') dans l'évidement (25) pour recevoir la matière, repoussée lors de l'estampage, du corps de contact (7).

9. Procédé selon une des revendications 5 à 8,
**caractérisé en ce que** le rayon laser (39, 39') pour le point de soudure (30, 30') est orienté généralement perpendiculairement à la surface (43) du côté (23) du support de contact (8, 9) sur la zone estampée (27, 27'), le point de soudure (30, 30') étant avantageusement créé par un rayon laser (39, 39') pulsé.
